# EUROPÄISCHE PATENTSCHRIFT

(11) **EP 3 358 231 B1**
(45) Veröffentlichungstag und Bekanntmachung des Hinweises auf die Patenterteilung: **06.03.2019**
(21) Anmeldenummer: 18151370.6
(22) Anmeldetag: 12.01.2018
(51) Int. Cl.: F16K 11/078, F16K 27/04

(54) **EINHEBELMISCHKARTUSCHE UND VERFAHREN ZUR MONTAGE DER EINHEBELMISCHKARTUSCHE**
SINGLE LEVER MIXING CARTRIDGE AND METHOD FOR MOUNTING SAME
CARTOUCHE MÉLANGEUR À UN SEUL LEVIER ET PROCÉDÉ DE MONTAGE DE LA CARTOUCHE MÉLANGEUR À UN SEUL LEVIER

(30) Priorität: 01.02.2017 DE 102017101989
(43) Veröffentlichungstag der Anmeldung: 08.08.2018
(73) Patentinhaber: Ideal Standard International NV, 1935 Zaventem (BE)
(72) Erfinder: Müller, Alexander, 54518 Hupperath (DE); Thönnes, Theo, 54552 Darscheid (DE)
(74) Vertreter: Feucker, Max Martin

(56) Entgegenhaltungen:
- DE-A1- 2 853 052
- DE-U1-202013 009 501
- DE-U1-202015 006 708
- JP-A- 2003 028 319
- JP-A- 2008 133 932

## Beschreibung

Die vorliegende Erfindung betrifft ein Verfahren zur Montage einer Einhebelmischkartusche und eine Einhebelmischkartusche für eine Sanitärarmatur, mit einem Gehäuse, wenigstens einer drehfest in dem Gehäuse fixierten Scheibe und einer mittels eines Betätigungshebels zu der wenigstens einen fixierten Scheibe beweglichen Scheibe, sowie mit einem Kaltwassereinlass, einem Heißwassereinlass und einem Mischwasserauslass, wobei sowohl die Temperatur als auch die Fließmenge des Mischwassers durch eine Stellung der mittels des Betätigungshebels betätigbaren beweglichen Scheibe vorgebbar ist, wobei ein insbesondere in einer Montageöffnung des Gehäuses angeordneter Deckel vorgesehen ist, der einen die Scheiben umfassenden Stapel zwischen sich und einem Boden des Gehäuse hält.

Eine Einhebelmischkartusche mit den vorgenannten Merkmalen ist aus DE 694 02 132 T2 bekannt, bei welcher der die drehsicher fixierte Platte und die bewegliche Platte umfassende Stapel von einem Deckel unter Druck in axialer Richtung zwischen dem Deckel und einem Boden des Gehäuses gehalten ist. Bei einigen Ausführungsformen solcher Einhebelmischkartuschen ist es jedoch wünschenswert, dass der Stapel in axialer Richtung zwischen dem Deckel und dem Boden nicht mit Kraft beaufschlagt ist, sondern dass in axialer Richtung ein geringes Spiel im Bereich von Zehntel Millimetern mit engen Toleranzen vorliegt, durch welches die Betätigbarkeit der Einhebelmischkartusche gewährleistet ist. Aufgrund der fertigungsbedingten Toleranzen in der Höhe der einzelnen Elemente des Stapels, variiert die Stapelhöhe allerdings um einen größeren Betrag als das erlaubte Spiel. Es ist daher erforderlich, dass der Abstand des Deckels zu dem Boden des Gehäuses jeder einzelnen Einhebelmischkartusche gesondert eingestellt wird.

Aus DE 20 2015 006 708 U1 ist zudem eine Einhebelmischkartusche mit den vorgenannten Merkmalen bekannt, bei der an dem Deckel und dem Gehäuse Halteflächen und die Halteflächen übergreifende Haken ausgebildet sind, die den Deckel gegen ein unbeabsichtigtes Entfernen sichern.

Weitere Einhebelmischkartuschen sind jeweils aus DE 28 53 052 A1, DE 34 19 209 A1 und DE 34 12 316 A1 bekannt.

Aus DE 28 53 052 A1 ist bekannt, Abstütznocken an einem dem Boden zugewandten Rand eines Gehäuses einer Einhebelmischkartusche bei Aufpressen des Bodens plastisch zu verformen.

Aufgabe der vorliegenden Erfindung ist es daher, die mit Bezug zum Stand der Technik geschilderten Nachteile zu überwinden und insbesondere eine Einhebelmischkartusche und ein Verfahren zur Montage einer Einhebelmischkartusche anzugeben, mit denen bei jeder Einhebelmischkartusche besonders genau das gewünschte Spiel in axialer Richtung für den jeweiligen Stapel vorliegt.

Gelöst wird die Aufgabe durch ein Verfahren und eine Einhebelmischkartusche mit den Merkmalen des jeweiligen unabhängigen Anspruchs. Vorteilhafte Weiterbildungen des Verfahrens und der Einhebelmischkartusche sind in den abhängigen Ansprüchen und in der Beschreibung angegeben, wobei einzelne Merkmale der vorteilhaften Weiterbildungen in technologisch sinnvoller Weise beliebig miteinander kombinierbar sind.

Gelöst wird die Aufgabe insbesondere durch ein Verfahren zur Montage einer Einhebelmischkartusche für eine Sanitärarmatur, umfassend zumindest die folgenden Schritte:
- Bereitstellen eines eine Montageöffnung aufweisenden Gehäuses und eines Deckels, wobei das Gehäuse und der Deckel Haken, mit den Haken korrespondierende Halteflächen und sich in axialer Richtung über eine Höhe erstreckende Axialanschläge aufweisen,
- Bilden eines Stapels, der wenigstens eine drehsicher in dem Gehäuse zu fixierende Scheibe und eine zu der zu fixierenden Scheibe bewegliche Scheibe umfasst,
- Messen einer Höhe des Stapels,
- Bearbeiten, insbesondere Verformen der Axialanschläge mittels eines Werkzeuges, wobei die axiale Höhe der Axialanschläge in Abhängigkeit von der gemessenen Stapelhöhe reduziert wird,
- Einbringen der Elemente des Stapels durch die Montageöffnung hindurch in das Gehäuse,
- Anbringen des Deckels an dem Gehäuse, insbesondere Einbringen des Deckels in die Montageöffnung, wobei die insbesondere am Gehäuse ausgebildeten Haken in Übergriff mit den insbesondere an dem Deckel ausgebildeten Halteflächen gebracht werden, so dass der Deckel gegen ein unbeabsichtigtes Entfernen gesichert ist.

Die Schritte des Verfahrens können in der angegebenen Reihenfolge oder in beliebiger Reihenfolge, soweit technisch sinnvoll, durchgeführt werden.

Mit dem erfindungsgemäßen Verfahren können die fertigungsbedingten Toleranzen der einzelnen Elemente des Stapels dadurch ausgeglichen werden, dass die tatsächliche Höhe des Stapels bestimmt wird und in Abhängigkeit von der bestimmten Stapelhöhe der Abstand zwischen dem auf die axialen Anschläge aufgedrückten Deckel und dem Boden des Gehäuses eingestellt wird. Diese Einstellung erfolgt insbesondere durch ein während der Montage in die Montageöffnung eingesetztes Werkzeug, welches die Höhe der Axialanschläge entsprechend beispielsweise durch Verformen oder durch spanendes Abtragen wie Drehen, Fräsen oder Schleifen reduziert. Nach Entfernen des Werkzeuges und Einsetzen der weiteren Bauteile in das Gehäuse wird der Deckel insbesondere in die Montageöffnung eingesetzt, wobei die die Halteflächen übergreifenden Haken die montierte Einhebelmischkartusche zusammenhalten. Die Haken sorgen allerdings nicht dafür, dass der Deckel in der gewünschten Stellung auf die Axialanschläge gedrückt wird. Das Aufdrücken des Deckels auf die Axialanschläge erfolgt vielmehr nach der Installation der Einhebelmischkartusche in der Sanitärarmatur. Vor der Installation der Einhebelmischkartusche in der Sanitärarmatur ist der Deckel also zwischen den übergreifende Haken und den Axialanschlägen in axialer Richtung beweglich. Prinzipiell könnte der Deckel also nach seiner Erstmontage von dem Gehäuse wieder entfernt werden. Ein Aufdrücken des Deckels auf das Gehäuse an den Axialanschlägen erfolgt erst nach Installation der Einhebelmischkartusche in der Sanitärarmatur.

Der Stapel kann zusätzlich zu der drehsicher fixierten Scheibe und der beweglichen Scheibe weitere Elemente umfassen. Beispielsweise kann der Stapel Dichtungselemente, weitere Scheiben und/oder Steuerelemente umfassen. Der Stapel umfasst also jene Elemente der Einhebelmischkartusche, die bei auf die Axialanschläge aufgedrücktem Deckel mit einem Spiel zwischen dem Deckel und dem Boden des Gehäuses gehalten werden. Der Deckel kann auf seiner dem Stapel zugewandten Innenseite insbesondere axiale Vorsprünge aufweisen, mit denen der Stapel in dem Gehäuse gehalten wird. In dem Gehäuse können auch weitere Elemente angeordnet sein, die gar nicht oder nur indirekt von dem Deckel in ihrer axialen Position in dem Gehäuse gehalten werden.

Die Messung der Stapelhöhe kann vor dem Einbringen der Elemente des Stapels in das Gehäuse oder auch innerhalb des Gehäuses erfolgen. Die Elemente des Stapels können einzeln, gemeinsam oder gruppenweise in das Gehäuse eingebracht und/oder vermessen werden.

Die Axialanschläge sind insbesondere einstückig an dem Gehäuse oder dem Deckel ausgebildete Elemente, die von einem Rand oder Randabschnitt der Gehäusewandung beziehungsweise von dem Deckel in axialer Richtung hervorstehen. Die Axialanschläge weisen zunächst eine Ausgangshöhe vor, die nach dem Messen der Stapelhöhe in Abhängigkeit von der Stapelhöhe um einen von der Stapelhöhe abhängigen Wert verringert wird. Hierzu werden die Axialanschläge bevorzugt mittels eines geeigneten Werkzeuges entsprechend verformt. Die bearbeiteten, bevorzugt verformten Axialanschläge weisen also nach der Bearbeitung eine geringere Höhe auf als zuvor.

Bevorzugt verlaufen die Axialanschläge abschnittsweise in Umfangsrichtung und werden durch das Werkzeug radial nach außen umgeformt.

Das Verformen der insbesondere aus Kunststoff bestehenden Axialanschläge erfolgt mittels des auf den Axialanschlägen aufgesetzten Werkzeuges, welches zu Ultraschallschwingungen angeregt wird und die Axialanschläge unter Reduzierung ihrer Höhe radial nach außen verformt. Durch die Anwendung von Ultraschallschwingungen kann insbesondere über den vorgebbaren Verfahrweg des Werkzeuges die zu reduzierende Höhe der Axialanschläge besonders genau eingestellt werden.

Es ist insbesondere genau ein Werkzeug vorgesehen, mit welchem alle Axialanschläge gleichzeitig um den gleichen Betrag in ihrer Höhe reduziert werden können.

Die Reduzierung der Höhe der Axialanschläge erfolgt insbesondere soweit, dass bei an den Axialanschlägen aufgedrücktem Deckel ein Abstand zwischen dem Deckel und einem Boden des Gehäuses zwischen 0,1 mm [Millimeter] und 0,4 mm größer ist als die Höhe des von dem Deckel in dem Gehäuse gehaltenen Stapels. Der in dem Gehäuse gehaltene Stapel hat also in axialer Richtung ausreichend Spiel und kann für jede Einhebelmischkartusche genau eingestellt werden.

Gelöst wird die Aufgabe auch durch eine Einhebelmischkartusche mit den eingangs genannten Merkmalen, bei der an dem Deckel und dem Gehäuse Halteflächen und die Haltefläche übergreifende Haken ausgebildet sind, die den Deckel so gegen ein unbeabsichtigtes Entfernen sichern und bei der auf der dem Deckel zugewandten Stirnseite des Gehäuses oder der dem Gehäuse zugewandten Stirnseite des Deckels ferner durch eine Vorbearbeitung bearbeitete, insbesondere verformte Axialanschläge ausgebildet sind, an denen der Deckel in einem in einer Sanitärarmatur montierten Zustand auf das Gehäuse gedrückt ist, wobei ein Abstand zwischen dem aufgedrückten Deckel und dem Boden des Gehäuses durch den Grad der Bearbeitung, insbesondere durch den Grad der Verformung der Axialanschläge vorgegeben ist, so dass der Stapel mit einem durch die Bearbeitung der Axialanschläge vorgegebenen Spiel in dem Gehäuse gehalten ist.

Die Anwendung des erfindungsgemäßen Verfahrens zur Montage der Einhebelmischkartusche ist also daran zu erkennen, dass die Axialanschläge, an welchen der Deckel auf das Gehäuse aufgedrückt ist, nach ihrer ursprünglichen Herstellung noch bearbeitet, bevorzugt verformt wurden.

Es kann also vorgesehen sein, dass die Haken an dem Deckel ausgebildet sind und die korrespondierenden Halteflächen an dem Gehäuse. Bevorzugt ist aber, dass die Haken an der dem Deckel zugewandten Stirnseite des Gehäuses ausgebildet sind und die an dem Deckel ausgebildeten Halteflächen übergreift.

Insbesondere weist der Deckel oder das Gehäuse mehrere radial auskragende Anschlagsflächen auf, die auf jeweils einem Axialanschlag des Gehäuses beziehungsweise des Deckels aufliegen, wobei insbesondere in Umfangsrichtung zwischen den Anschlagsflächen die Halteflächen für die Haken ausgebildet sind. Die Anschlagsflächen und die Halteflächen sind in Umfangsrichtung insbesondere abwechselnd hintereinander angeordnet.

Insbesondere in diesem Zusammenhang ist vorgesehen, dass das Gehäuse oder der Deckel an seiner der Montageöffnung zugewandten Stirnseite mehrere sich in axialer Richtung erstreckende Schnapphaken aufweist, wobei zwischen den Schnapphaken sich in axialer Richtung erstreckende Vorsprünge ausgebildet sind, auf deren Oberseiten jeweils die verformten Axialanschläge ausgebildet sind. Somit sind auch die Schnapphaken und die Axialanschläge in Umfangsrichtung abwechselnd hintereinander bevorzugt einteilig mit dem Gehäuse oder dem Deckel ausgebildet. Die Anschlagflächen und die Halteflächen sind somit radial außen an dem Deckel oder dem Gehäuse ausgebildet, während die Axialanschläge und die Haken radial außen an dem Gehäuse oder dem Deckel ausgebildet sind. Die Haken und die Halteflächen sind insbesondere so geformt, dass beim Einbringen des Deckels in die Montageöffnung die Haken federnd radial nach außen ausgelenkt werden und danach zurückschnappen und die Halteflächen übergreifen. Ein Auslenken der Haken nach innen wäre aber auch vorstellbar. Somit ist sichergestellt, dass der Deckel gleichmäßig in die Montageöffnung eingebracht werden kann und dass bei in der Sanitärarmatur installierter Kartusche der Deckel auf den gleichmäßig über den Umfang verteilten Axialanschlägen aufliegt.

Die Axialanschläge weisen insbesondere eine radiale Dicke quer zu ihrer axialen Erstreckungsrichtung oder quer zu ihrer Erstreckungsrichtung nach der Verformung auf, die höchstens die Hälfte der Dicke der Wandung des Gehäuses oder der Dicke der an dem Gehäuse ausgebildeten Vorsprünge beträgt.

Erfindungsgemäß ist vorgesehen, dass die Axialanschläge radial nach außen verformt sind, wobei insbesondere die Axialanschläge an einem oberen Rand des Gehäuses oder einem unteren Rand des Deckels, gegebenenfalls jeweils an einem oberen Rand der an dem Gehäuse ausgebildeten Vorsprünge gebildet sind und mit einem radialen Versatz zu einer Kante des Randes nach innen an das Gehäuse oder an den Deckel angebunden sind. Somit wird gewährleistet, dass genügend Raum zur Verfügung steht, in den die Axialanschläge jeweils verformt werden können, ohne dass die verformten Axialanschläge radial über das Gehäuse beziehungsweise den Deckel hervorstehen.

Damit der Deckel auch in Umfangsrichtung sicher in dem Gehäuse gehalten ist, kann vorgesehen sein, dass an dem Deckel Verdrehsicherungselemente ausgebildet sind, die mit entsprechenden Verdrehsicherungsanschlägen an dem Gehäuse korrespondieren.

Die mit Bezug zu dem erfindungsgemäßen Verfahren offenbarten Details und Vorteile lassen sich auf die erfindungsgemäße Vorrichtung übertragen und anwenden und umgekehrt. Die Erfindung sowie das technische Umfeld werden im Folgenden anhand der Figuren beispielhaft erläutert. Es zeigen schematisch
- Fig. 1:: einen Längsschnitt durch eine Einhebelmischkartusche,
- Fig. 2:: einen Deckel und ein Gehäuse der Mischkartusche in Explosions-darstellung,
- Fig. 3:: einen Axialanschlag vor der Verformung,
- Fig. 4:: den Axialanschlag nach der Verformung und
- Fig. 5:: den Axialanschlag nach der Montage des Deckels.

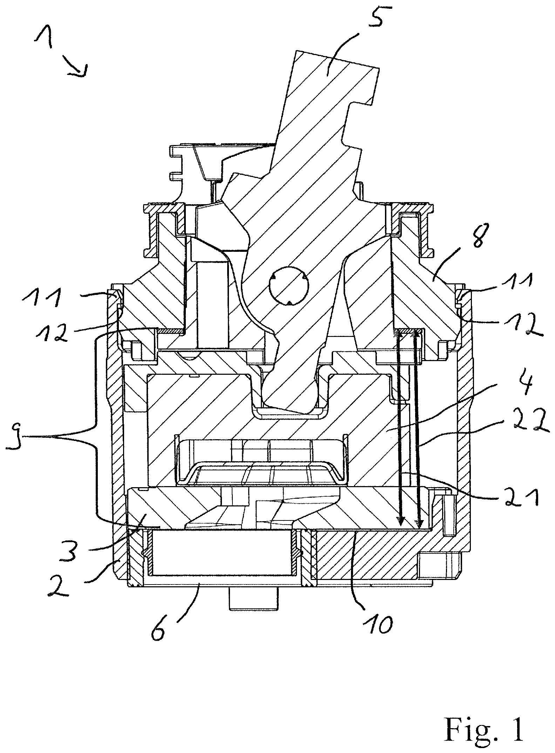

Die in Fig. 1 dargestellte Einhebelmischkartusche 1 umfasst ein Gehäuse 2 mit einem Boden 10. In dem Boden 10 sind nicht dargestellte Einlässe für Heiß- und Kaltwasser, sowie ein Mischwasserauslass 6 ausgebildet. In dem Gehäuse 2 ist ein Stapel 9 angeordnet, der unten eine verdrehsicher fixierte Scheibe 3 aufweist, über der eine dazu bewegliche Scheibe 4 angeordnet ist.

In der fixierten Scheibe 3 sind mit den Einlässen und dem Mischwasserauslass 6 korrespondierende Durchgangsöffnungen ausgebildet. In der beweglichen Scheibe 4 ist eine Mischkammer ausgebildet. Die bewegliche Scheibe 4 kann zur Einstellung der Mischwassertemperatur mittels eines Betätigungshebels 5 in dem Gehäuse 2 durch Drehung des Betätigungshebels 5 um eine Kartuschenlängsachse verdreht werden. Zur Einstellung der Fließmenge kann die bewegliche Scheibe 4 in dem Gehäuse 2 linear verschoben werden, wozu der Betätigungshebel 5 um eine horizontale Schwenkachse verschwenkt wird. Die Funktion solcher Einhebelmischkartuschen ist hinlänglich bekannt.

Der die Scheiben 3, 4 und weitere Elemente umfassende Stapel 9 wird von einem Deckel 8 in dem Gehäuse 2 gehalten. An dem Deckel 8 sind Halteflächen 12 ausgebildet, die von an dem Gehäuse 2 ausgebildeten Haken 11 übergriffen werden, sodass der Deckel 8 gegen ein unbeabsichtigtes Entfernen gesichert ist.

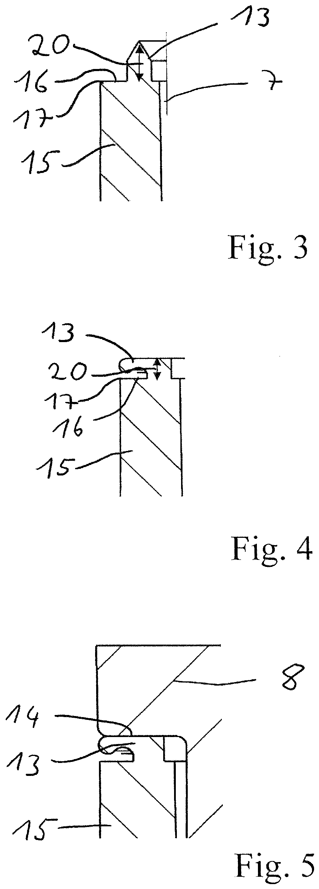

In einem in einer Sanitärarmatur installierten Zustand wird der Deckel 8 auf in Fig. 1 nicht dargestellte Axialanschläge 13 gedrückt, so dass ein Abstand 22 zwischen dem Deckel 8 und dem Boden 10 des Gehäuses 2 durch die Höhe 20 der Axialanschläge 13 vorgegeben ist. Der Abstand 22 zwischen Deckel 8 und Boden 10 ist durch die Höhe 20 der Axialanschläge 13 dabei so eingestellt, dass der Abstand 22 beispielsweise 0,2 mm größer ist als eine Höhe 21 des Stapels 9. Der Stapel 9 ist also mit ausreichend Spiel zwischen dem Deckel 8 und dem Boden 10 des Gehäuses 2 gehalten. Die Einstellung der Höhe 20 der Axialanschläge 13 wird mit Bezug zu den Figuren 3 bis 5 näher erläutert.

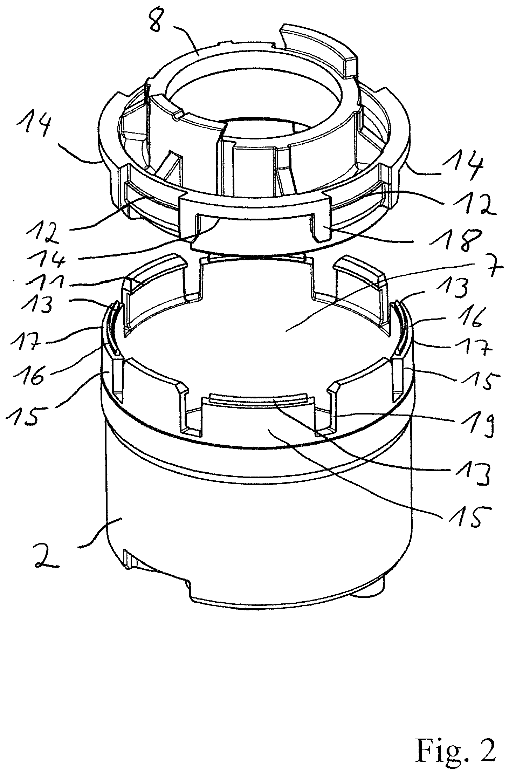

Der Deckel 8 und das Gehäuse 2 sind in Fig. 2 in einer Explosionsdarstellung gezeigt. Auf einer Oberseite weist das Gehäuse 2 eine Montageöffnung 7 auf. Es ist zu erkennen, dass an dem Gehäuse 2 vier in Umfangsrichtung verteilte Haken 11 ausgebildet sind. Zwischen den Haken 11 ist jeweils ein Vorsprung 15 ausgebildet, auf deren oberen Rändern 16 jeweils ein Axialanschlag 13 ausgebildet ist. Der Rand 16 ist axial außen von einer Kante 17 begrenzt. Die Axialanschläge 13 weisen eine Höhe 20 in axialer Richtung auf.

Der Deckel 8 weist radial vorspringende Anschlagsflächen 14 auf, die mit den Axialanschlägen 13 korrespondieren. Die Anschlagsflächen 14 werden nach der Installation der Einhebelmischkartusche 1 in einer Sanitärarmatur auf die Axialanschläge 13 aufgedrückt. Die Anschlagsflächen 14 sind in Umfangsrichtung von Verdrehsicherungselementen 18 begrenzt, die mit Verdrehsicherungsanschlägen 19 an dem Gehäuse 2 korrespondieren, so dass der Deckel 8 nur in bestimmten Ausrichtungen zu dem Gehäuse 2 in diesem montierbar ist und nach dem Montieren drehsicher in dem Gehäuse 2 angeordnet ist. Der Deckel 8 weist zudem die Halteflächen 12 auf, die axial nach oben gerichtet sind und nach der Montage des Deckels 8 von den Haken 11 übergriffen werden.

In Fig. 3 ist eine Detailansicht eines Axialanschlages 13 vor der Montage der Einhebelmischkartusche 1 gezeigt. Der Axialanschlag 13 ist auf einen Vorsprung 15 ausgebildet und ist zu einer Kante 17 eines Randes 16 des Vorsprunges 15 radial nach innen versetzt angeordnet. Der Axialanschlag 13 weist eine Dicke auf, die der Hälfte der Dicke des Vorsprunges 15 entspricht.

Bevor die Höhe 20 des Axialanschlages 13 reduziert wird, wird zunächst die Höhe 21 des Stapels 9 bestimmt, welche aufgrund der Toleranzen der Elemente für unterschiedliche Kartuschen des Stapels 9 variieren kann. Um dennoch immer den gleichen Abstand im Rahmen der Toleranz zwischen dem Deckel 8 und dem Boden 10 des Gehäuses 2 zu gewährleisten, wird die Höhe 20 der Axialanschläge 13 reduziert. Hierzu wird ein nicht dargestelltes Werkzeug in die Montageöffnung 7 eingesetzt, welches auf die Axialanschläge 13 gedrückt wird. Im Folgenden werden Ultraschallschwingungen in das Werkzeug eingeleitet, wodurch die Axialanschläge 13 nach außen umgeformt werden. Ein umgeformter Axialanschlag 13 ist in Fig. 4 dargestellt. Es ist zu erkennen, dass die Höhe 20 des Axialanschlages 13 gegenüber der ursprünglichen Höhe reduziert wurde. Es ist zudem zu erkennen, dass die Spitze des Axialanschlages 13 in Richtung der Kante 17 des Randes 16 des Vorsprunges 15 umgebogen wurde.

In Fig. 5 ist zu erkennen, wie der Deckel 8 mit einer Anschlagsfläche 14 auf dem Axialanschlag 13 aufgelegt ist. Soweit die Haken 11 die Halteflächen 12 des Deckels 8 übergreifen, ist in dem montierten Zustand der Deckel 8 zwischen dem Haken 11 und den Axialanschlägen 13 in axialer Richtung bewegbar. Erst nachdem die Einhebelmischkartusche 1 in einer Sanitärarmatur installiert ist, wird der Deckel 8 auf die Axialanschläge 13 aufgedrückt. In diesem Zustand verbleibt dann zwischen dem Deckel 8 und dem Boden 10 ausreichendes Spiel für die Elemente des Stapels 9, so dass die Einhebelmischkartusche 1 leichtgängig betätigbar ist.

### Bezugszeichenliste

- 1: Einhebelmischkartusche
- 2: Gehäuse
- 3: fixierte Scheibe
- 4: bewegliche Scheibe
- 5: Betätigungshebel
- 6: Mischwasserauslass
- 7: Montageöffnung
- 8: Deckel
- 9: Stapel
- 10: Boden
- 11: Haken
- 12: Haltefläche
- 13: Axialanschlag
- 14: Anschlagsfläche
- 15: Vorsprung
- 16: Rand
- 17: Kante
- 18: Verdrehsicherungselement
- 19: Verdrehsicherungsanschlag
- 20: Höhe des Axialanschlages
- 21: Stapelhöhe
- 22: Abstand

## Patentansprüche

1. Verfahren zur Montage einer Einhebelmischkartusche (1) für eine Sanitärarmatur, umfassend zumindest die folgenden Schritte:
- Bereitstellen eines eine Montageöffnung (7) aufweisenden Gehäuses (2) und eines Deckels (8), wobei das Gehäuse (2) und der Deckel (8) Haken (11), mit den Haken (11) korrespondierende Halteflächen (12) und sich in axialer Richtung über eine Höhe (20) erstreckende Axialanschläge (13) aufweisen,
- Bilden eines Stapels (9), der wenigstens eine drehsicher in dem Gehäuse (2) zu fixierende Scheibe (3) und eine zu der zu fixierenden Scheibe (3) bewegliche Scheibe (4) umfasst,
- Messen einer Höhe (21) des Stapels (9),
- Verformen der aus Kunststoff bestehenden Axialanschläge (13) mittels eines auf den Axialanschlägen (13) aufgesetzten Werkzeuges, wobei die Höhe (20) der Axialanschläge (13) in Abhängigkeit von der gemessenen Stapelhöhe (21) reduziert wird, wobei das Werkzeug zu Ultraschallschwingungen angeregt wird und die Axialanschläge (13) unter Reduzierung ihrer Höhe (20) radial nach außen verformt werden
- Einbringen der Elemente des Stapels (9) durch die Montageöffnung (7) hindurch in das Gehäuse (2),
- Anbringen des Deckels (8) an das Gehäuse (2), wobei die Haken (11) in Übergriff mit den Halteflächen (12) gebracht werden, so dass der Deckel (8) gegen ein unbeabsichtigtes Entfernen gesichert ist.

2. Verfahren nach Anspruch 1, wobei die Höhe (20) der Axialanschläge (13) so weit reduziert wird, dass bei an den Axialanschlägen (13) aufgedrücktem Deckel (8) ein Abstand (22) zwischen dem Deckel (8) und einem Boden (10) des Gehäuses (2) zwischen 0,1 mm und 0,4 mm größer ist als die Höhe (21) des von dem Deckel (8) in dem Gehäuse (2) gehaltenen Stapels (9).

3. Einhebelmischkartusche (1) für eine Sanitärmatur, mit einem Gehäuse (2), wenigstens einer drehfest in dem Gehäuse fixierten Scheibe (3) und einer mittels eines Betätigungshebels (5) zu der wenigstens einen fixierten Scheibe (3) beweglichen Scheibe (4), sowie mit einem Kaltwassereinlass, einem Heißwassereinlass und einem Mischwasserauslass (6), wobei sowohl die Temperatur als auch die Fließmenge des Mischwassers durch eine Stellung der mittels des Betätigungshebels (5) betätigbaren beweglichen Scheibe (4) vorgebbar ist, wobei ein Deckel (8) vorgesehen ist, der einen die Scheiben (3, 4) umfassenden Stapel (9) zwischen sich und einem Boden (10) des Gehäuses (2) hält, **dadurch gekennzeichnet, dass** an dem Deckel (8) und dem Gehäuse (2) Halteflächen (12) und die Halteflächen (12) übergreifende Haken (11) ausgebildet sind, die den Deckel (8) so gegen ein unbeabsichtigtes Entfernen sichern und dass auf der dem Deckel (8) zugewandten Stirnseite des Gehäuses (2) oder der dem Gehäuse (2) zugewandten Stirnseite des Deckels (8) ferner durch eine Vorbearbeitung radial nach außen verformte Axialanschläge (13) ausgebildet sind, an denen der Deckel (8) in einem in einer Sanitärarmatur montierten Zustand auf das Gehäuse (2) gedrückt ist, wobei ein Abstand zwischen dem aufgedrückten Deckel (8) und dem Boden (10) des Gehäuses (2) durch den Grad der Bearbeitung der Axialanschläge (13) vorgegeben ist, so dass der Stapel (9) mit einem durch die Bearbeitung der Axialanschläge (13) vorgegebenen Spiel in dem Gehäuse (2) gehalten ist.

4. Einhebelmischkartusche (1) nach Anspruch 3, wobei der Deckel (8) oder das Gehäuse (2) mehrere radial auskragende Anschlagsflächen (14) aufweist, die auf jeweils einem Axialanschlag (13) des Gehäuses (2) oder des Deckels (8) aufliegen, und wobei zwischen den Anschlagsflächen (14) die Halteflächen (12) für die Haken (11) ausgebildet sind.

5. Einhebelmischkartusche (1) nach Anspruch 3 oder 4, wobei das Gehäuse (2) an seiner der Montageöffnung (7) zugewandten Stirnseite oder der Deckel (8) mehrere sich in axialer Richtung erstreckende Schnapphaken (11) aufweist und wobei zwischen den Schnapphaken (11) sich in axialer Richtung erstreckende Vorsprünge (15) ausgebildet sind, auf dessen Oberseiten jeweils die bearbeiteten Axialanschläge (13) ausgebildet sind.

6. Einhebelmischkartusche (1) nach einem der Ansprüche 3 bis 5, wobei eine radiale Dicke der Axialanschläge (13) höchstens die Hälfte einer Dicke einer Gehäusewand oder Deckelwand beträgt.

7. Einhebelmischkartusche (1) nach einem der Ansprüche 3 bis 6, wobei die Axialanschläge (13) an einem oberen Rand (16) des Gehäuses (2) oder an einem Rand des Deckels (8) gebildet sind und mit einem radialen Versatz von einer Kante (17) des Randes (16) nach innen an das Gehäuse (2) oder den Deckel (8) angebunden sind.

8. Einhebelmischkartusche (1) nach einem der Ansprüche 3 bis 7, wobei an dem Deckel (8) Verdrehsicherungselemente (18) ausgebildet sind, die mit entsprechenden Verdrehsicherungsanschlägen (19) an dem Gehäuse (2) korrespondieren.

## Claims

1. Method of assembling a single-lever mixer cartridge (1) for a sanitary tap, comprising at least the following steps:
- provision of a housing (2) having an assembly opening (7) and a cover (8), wherein the housing (2) and cover (8) have hooks (11), with holding surfaces (12) corresponding to the hooks (11) and axial stops (13) extending in the axial direction over a height (20),
- forming a stack (9), comprising at least one disc (3) to be fixed in a non-rotatable manner in the housing (2) and a disc (4) which is movable in relation to the disc (3) to be fixed,
- measuring a height (21) of the stack (9)
- deforming of the axial stops (13), which are made of plastic, by means of a tool applied to the axial stops (13), wherein the height (20) of the axial stops (13) is reduced depending on the measured stack height (21), wherein ultrasound vibrations are induced in the tool and the axial stops (13) are deformed radially outwards while their height (20) is reduced,
- introducing the elements of the stack (9) through the assembly opening (7) into the housing (2),
- applying the cover (8) to the housing (2), wherein the hooks (11) are brought into encroachment with the holding surfaces (12) so that the cover (8) is secured against unintentional removal.

2. Method according to claim 1 wherein the height (20) of the axial stops (13) is reduced so far that with the cover (8) pressed on at the axial stops (13) a distance (22) between the cover (8) and a base (10) of the housing (2) is between 0.1 mm and 0.4 mm greater than the height (21) of the stack (9) held by the cover (8) in the housing (2).

3. Single-lever mixer cartridge (1) for a sanitary tap, with a housing (2), at least one disc (3) fixed in a non-rotatable manner in the housing and a disc (4) which is movable in relation to the at least one fixed disc (3) by mean of an operating lever (5), as well as with a cold water inlet, a hot water inlet and mixed water outlet (6), wherein both the temperature and the flow quantity of the mixed water can predetermined by way of a setting of the disc (4), movable by means of the operating lever (5), wherein a cover (8) is provided which holds a stack (9) encompassing the discs (3, 4) between it and a base (10) of the housing (2), **characterised in that** on the cover (8) and the housing (2) holding surfaces (12) and hooks (11) encroaching on the holding surfaces (12) are formed, which in this way secure the cover (8) against unintentional removal and **in that** on the front side of the housing (2) facing the cover (8) or the front side of the cover (8) facing the housing (2) axial stops (13) radially outwardly deformed by way of pre-processing are formed, on which the cover (8) when assembled in a sanitary tap is pressed onto the housing (2), wherein a gap between the pressed-on cover (8) and the base (10) of the housing (2) is predefined by the degree of processing of the axial stops (13) so that the stack (9) is held in the housing (2) with a clearance predetermined by the processing of the axial stops (13).

4. Single-lever mixer cartridge (1) according to claim 3 wherein the cover (8) or the housing (2) comprises several radially outwardly projecting stop surfaces (14), which each abut on one axial stop (13) of the housing (2) or the cover (8) and wherein between the stop surfaces (14) the holding surfaces (12) for the hooks (11) are formed.

5. Single-lever mixer cartridge (1) according to claim 3 of 4 wherein the housing (2) on its front side facing the assembly opening (7) or the cover (8) comprises several snap-in hooks (11) extending in the axial direction and wherein between the snap-in hooks (11) projections (15) are formed extending in the axial direction, on the upper sides of which are the processed axial stops (13).

6. Single-lever mixer cartridge (1) according to any one of claims 3 to 5 wherein a radial thickness of the axial stops (13) is at most half of a thickness of a housing wall or cover wall.

7. Single-lever mixer cartridge (1) according to any one of claims 3 to 6 wherein the axial stops (13) are formed on an upper edge (16) of the housing (2) or on an edge of the cover (8) and attached to the housing (2) or the cover (8) with a radial offsetting of a corner (17) of the edge (16) inwards.

8. Single-lever mixer cartridge (1) according to any one of claims 3 to 7 wherein rotation prevention elements (18) are provided on the cover (8) which correspond with corresponding rotation prevention stops (19) on the housing (2).

## Revendications

1. Procédé, destiné à monter un mitigeur mono-commandé (1) pour une robinetterie sanitaire, comprenant au moins les étapes suivantes consistant à :
- mettre à disposition un corps (2) comportant un orifice de montage (7) et un couvercle (8), le corps (2) et le couvercle (8) comportant des crochets (11), des surfaces de retenue (12) correspondant avec les crochets (11) et des butées axiales (13) s'étendant dans une direction axiale sur une hauteur (20),
- créer un empilement (9), qui comprend au moins une rondelle (3) qui doit se fixer en étant solidaire en rotation dans le corps (2) et une rondelle (4) mobile par rapport à la rondelle (3) qui doit être fixée,
- mesurer une hauteur (21) de l'empilement (9),
- déformer les butées axiales (13) constituées de matière plastique au moyen d'un outil placé sur les butées axiales (13), la hauteur (20) des butées axiales (13) étant réduite en fonction de la hauteur d'empilement (21) mesurée, l'outil étant excité en vibrations ultrasonores et les butées axiales (13) étant déformées en direction radiale vers l'extérieur, sous réduction de leur hauteur (20),
- introduire les éléments de l'empilement (9) à travers l'orifice de montage (7) dans le corps (2),
- monter le couvercle (8) sur le corps (2), les crochets (11) étant amenés en empiétement avec les surfaces de retenue (12), de sorte que le couvercle (8) soit bloqué contre un retrait intempestif.

2. Procédé selon la revendication 1, la hauteur (20) des butées axiales (13) étant réduite jusqu'à ce que, lorsque le couvercle (8) est appuyé sur les butées axiales (13), un écart (22) entre le couvercle (8) et un fond inférieur (10) du corps (2) soit supérieur de 0,1 mm à 0,4 mm à la hauteur (21) de l'empilement (9) maintenu par le couvercle (8) dans le corps (2).

3. Mitigeur mono-commandé (1), destiné à une robinetterie sanitaire, pourvu d'un corps (2), d'au moins une rondelle (3) fixée de manière solidaire en rotation dans le corps et d'une rondelle (4) mobile au moyen d'un levier de commande (5) par rapport à l'au moins une rondelle (3) fixée, ainsi que d'une entrée d'eau froide, d'une entrée d'eau chaude et d'une sortie d'eau mélangée (6), aussi bien la température que le débit de l'eau mélangée étant prédéfinissables par une position de la rondelle (4) mobile susceptible d'être manoeuvrée au moyen du levier de commande (5), un couvercle (8) étant prévu, qui maintient entre lui et un fond inférieur (10) du corps (2) un empilement (9) comprenant les rondelles (3, 4), **caractérisé en ce que** sur le couvercle (8) et le corps (2) sont conçues des surfaces de retenue (12) et des crochets (11) chevauchant les surfaces de retenue (12), qui bloquent le couvercle (8) contre un retrait intempestif et **en ce que** sur la face frontale du corps (2) dirigée vers le couvercle (8) ou sur la face frontale du couvercle (8) dirigée vers le corps (2) sont conçues en outre des butées axiales (13) déformées vers l'extérieur par un pré-usinage sur lesquelles, dans une position montée sur la robinetterie sanitaire, le couvercle (8) est appuyé sur le corps (2), un écart entre le couvercle (8) appuyé et le fond inférieur (10) du corps (2) étant prédéfini par le taux de l'usinage des butées axiales (13), de sorte que l'empilement (9) soit maintenu dans le corps (2) avec un jeu prédéfini par l'usinage des butées axiales.

4. Mitigeur mono-commandé (1) selon la revendication 3, le couvercle (8) ou le corps (2) comportant plusieurs surfaces de butées débordant en direction radiale qui reposent respectivement sur une butée axiale (13) du corps (2) ou du couvercle (8), entre les surfaces de butée (14) étant conçues les surfaces de retenue (12) pour les crochets (11).

5. Mitigeur mono-commandé (1) selon la revendication 3 ou 4, sur sa face frontale dirigée vers l'orifice de montage (7), le corps (2) ou le couvercle (8) comportant plusieurs crochets d'encliquetage (11) s'étendant en direction axiale et entre les crochets d'encliquetage (11) étant conçues des saillies (15) s'étendant en direction axiale, sur la face supérieure desquelles sont conçues respectivement les butées axiales (13) usinées.

6. Mitigeur mono-commandé (1) selon l'une quelconque des revendications 3 à 5, une épaisseur radiale des butées axiales (13) s'élevant au maximum à la moitié d'une épaisseur d'une paroi du corps ou d'une paroi du couvercle.

7. Mitigeur mono-commandé (1) selon l'une quelconque des revendications 3 à 6, les butées axiales (13) étant formées sur un bord supérieur (16) du corps (2) ou sur un bord du couvercle (8) et étant reliées avec un décalage radial d'une arête (17) du bord (16) vers l'intérieur sur le corps (2) ou sur le couvercle (8).

8. Mitigeur mono-commandé (1) selon l'une quelconque des revendications 3 à 7, sur le couvercle (8) étant conçus des éléments anti-rotation (18) qui correspondent avec des butées anti-rotation (19) correspondantes sur le corps (2).
